# EUROPÄISCHE PATENTSCHRIFT

(11) **EP 1 879 010 B1**
(45) Veröffentlichungstag und Bekanntmachung des Hinweises auf die Patenterteilung: **13.02.2013**
(21) Anmeldenummer: 07010601.8
(22) Anmeldetag: 29.05.2007
(51) Int. Cl.: G01M 17/02, G01N 17/00, G01M 17/013

(54) **Verfahren zur betriebsähnlichen Prüfung von Radial- und Seitenkräften, Neigungswinkeln und Korrosionsbeständigkeit eines Fahrzeugrads**
Method for a test under simulated operating conditions of radial and lateral forces, angle of inclination and the resistance against corrosion for a vehicle wheel
Procédé destiné à la vérification dans des conditions simulées d'opération de forces radiales et latérales, d'angles d'inclinaison et de la résistance contre la corrosion pour une roue de véhicule

(30) Priorität: 12.07.2006 DE 102006032146
(43) Veröffentlichungstag der Anmeldung: 16.01.2008
(73) Patentinhaber: Dr. Ing. h.c. F. Porsche AG, 70435 Stuttgart (DE)
(72) Erfinder: Hasenmaier, Werner, 71272 Renningen (DE)

(56) Entgegenhaltungen:
- DE-A1- 10 137 279
- US-A- 3 824 327

## Beschreibung

Die Erfindung betrifft ein Verfahren zur betriebsähnlichen Prüfung von Radial- und Seitenkräften sowie Neigungswinkeln an einem Fahrzeugrad, insbesondere bei einem zweiaxialen Räderprüfstand, gemäß dem Oberbegriff des Anspruchs 1.

Weiterhin betrifft die Erfindung ein Dichtelement zur Durchführung des Verfahrens gemäß einem der Ansprüche 3 bis 12.

Aus der DE 101 37 279 ist eine Vorrichtung zur Erprobung eines Radlagers unter Einsatzbedingungen bekannt, bei der mittels einer Sprühvorrichtung Schmutzwasser in den Umgebungsbereich des zu untersuchenden Radlagers abgesprüht werden kann.

Aus dem Stand der Technik sind Verfahren zur betriebsähnlichen Prüfung von Radial- und Seitenkräften sowie Neigungswinkeln bekannt. Dieses Verfahren wird zumeist mit einem zwelaxialen Räderprüfstand (ZWARP) durchgeführt. Dieser Radprüfstand wird eingesetzt, um die Betriebsfestigkeit von PKW- und LKW-Rädern zu bestätigen sowie die Konstruktion neuer Räder, den Einsatz neuer Werkstoffe und neuer Fertigungsverfahren zu optimieren. Mit dem Be-griff Rad ist im allgemeinen vornehmlich die Felge gemeint, da der beschriebene Radprüfstand nicht die Belastbarkeit der Gummimischung von Reifen, sondern die Dauerfestigkeit der Felge im Betrieb simuliert.

Im realen Fahrbetrieb sind die auf das Fahrzeugrad wirkenden Radial- und Axialkräfte nicht konstant, sondern hängen von einer Vielzahl von Faktoren ab. Um zeitlich veränderliche, instationäre Radial- und Axialkräfte auf ein zu prüfendes Rad aufbringen zu können, sind zweiaxiale Räderprüfstände entwickelt worden. Das zu prüfende Rad läuft mit montiertem Reifen im Inneren einer von einer Antriebseinheit angetriebenen Trommel ab und wird mittels einer Belastungseinheit gegen die Trommel gedrückt. Die Belastungseinheit des Räderprüfstandes wird von zwei getrennten Belastungszylindern aufgebracht. Der eine der Belastungszylinder ist ein Vertikalbelastungszylinder zum Erzeugen einer Vertikalkraft, der andere ein Horizontalbelastungszylinder zur Erzeugung einer Horizontalkraft. Des Weiteren kann der Sturzwinkel des Rades relativ zur Trommel mittels eines Sturzzylinders verstellt bzw. beeinflusst werden.

Der zweiaxiale Räderprüfstand (ZWARP) hat sich im Einsatz bewährt. Ein wesentlicher Nachteil liegt jedoch in der Tatsache, dass mit dem ZWARP lediglich die betriebsähnliche Prüfung von Radial- und Seitenkräften sowie der Neigungswinkel an einem Fahrzeugrad simuliert werden kann.

Ausgehend von diesem Stand der Technik ist es daher die Aufgabe der vorliegenden Erfindung ein Verfahren vorzuschlagen, bei dem parallel zur betriebsähnlichen Prüfung im Radprüfstand ein Korrosionsbeständigkeitstest am Fahrzeugrad durchgeführt werden kann. Des Weiteren werden Mittel zur Durchführung eines Korrosionsbeständigkeitstests vorgeschlagen.

Diese Aufgabe wird durch ein Verfahren nach der Lehre des Anspruchs 1 bzw. durch Mittel zur Durchführung des Verfahrens gemäß einem der Unteransprüche 2 bis 12 gelöst.

Vorteilhafte Ausgestaltungen der Erfindung sind Gegenstand der Unteransprüche. Erfindungsgemäß zeichnet sich das Verfahren zur Durchführung eines Korrosionsbeständigkeitstests im Wesentlichen durch die aufeinanderfolgenden Verfahrensschritte aus:
a.) Bereitstellen zumindest eines Dichtelements;
b.) Befestigen des zumindest einen Dichtelements an einem Umfangsrand der Fahrzeugfelge und/oder des Fahrzeugrades, wobei unter Bildung eines wasserdichten Hohlraums zumindest eine Stirnfläche und/oder Felgenschüssel der Fahrzeugfelge im Inneren des Hohlraums angeordnet ist;
c.) teilweise oder vollständige Befüllung des Hohlraums mit einer korrosiven Flüssigkeit über zumindest eine am Dichtelement vorgesehene Zugangsöffnung;
d.) Verschließen der Zugangsöffnung.

Der Vorteil dieses Verfahrens liegt darin, dass neben der betriebsähnlichen Prüfung ein parallel durchführbarer Korrosionsbeständigkeitstest am Fahrzeugrad durchgeführt werden kann. Es wurde nämlich festgestellt, dass die Betriebsfestigkeit von Bauteilen durch korrosive Medien, die während der Prüfung auf den Prüfling wirken, deutlich vermindert werden kann. In praktisch durchgeführten Versuchen verminderte sich beispielsweise die Betriebsfestigkeit um den Faktor 2,8.

Darüber hinaus kann auf einen vorherigen bzw. später durchzuführenden Korrosionsbeständigkeitstest verzichtet werden. In gleicher Weise kann die Wirksamkeit eines Korrosionsschutzes nachgewiesen werden. Da dieser Arbeitsgang entfällt können die Kosten des Fahrzeugrades bzw. des Produktionsprozesses gesenkt werden. Ein weiterer Vorteil des vorgeschlagenen Verfahrens besteht in der Tatsache, dass am Radprüfstand selbst keine Veränderungen oder Umbaumaßnahmen durchgeführt werden müssen.

Ferner wird zur Durchführung des Verfahrens ein erfindungsgemäßes Dichtelement vorgeschlagen, wobei das Dichtelement in der Art einer wasserdichten Hülle und/oder Abdeckung, insbesondere jedoch einer wasserdichten Gummimembrane, ausgebildet sein kann. Dies hat den Vorteil, dass der Korrosionsbeständigkeitstest mit sehr effizienten und dennoch einfach herzustellenden Mitteln durchgeführt werden kann.

Eine Ausführungsform sieht vor, dass am Dichtelement zumindest eine Zugangsöffnung vorgesehen ist, wobei an der Zugangsöffnung bzw. am Dichtelement Mittel zum Verschließen der Zugangsöffnung vorgesehen sein können. Über diese Zugangsöffnung kann der vom Dichtelement und der Felge gebildete wasserdichte Hohlraum mit einer korrosiven Flüssigkeit befüllt bzw. nach Beendigung der Testphase entleert werden.

Die Mittel zum Verschließen der Zugangsöffnung können in der Art eines wasserdichten Reiß-, Dreh- und/oder Schraubverschlusses ausgebildet sein. In jedem Fall sollten die Mittel so ausgebildet sein, dass ein im Wesentlichen wasserdichter Hohlraum gebildet wird. Es ist auch denkbar an der Zugangsöffnung Mittel zur Kontaktierung mit einem Einfüllelement, beispielsweise einem Schlauch oder dergleichen, vorzusehen.
Eine weitere Ausführungsform sieht vor, dass am Dichtelement zumindest eine Durchtrittsöffnung vorgesehen sein kann, wobei im Bereich der Durchtrittsöffnung ein Halteelement angeordnet ist, an dem das Fahrzeugrad befestigt werden kann. Bei dem Halteelement kann es sich beispielsweise um eine Achse oder dergleichen handeln, welche das Fahrzeugrad während der Testphase in der Trommel des Radprüfstandes hält bzw. an der das Fahrzeugrad während der Testphase befestigt ist.

Denkbar ist ferner, dass an der Durchtrittsöffnung Dichtmittel zum wasserdichten Abdichten der Durchtrittsöffnung im Kontaktbereich zum Halteelement vorgesehen sind. Diese Dichtmittel sollen verhindern bzw. gewährleisten, dass die korrosive Flüssigkeit nicht aus dem gebildeten Hohlraum entweichen kann.

Die Dichtmittel können in der Art einer Dichtung, insbesondere eines Dichtlippenrings, ausgebildet sein. Der Dichtlippenring wiederum kann aus mehreren festen und/oder flexiblen Elementen bestehen, die sich im Wesentlichen abdichtend um das Halteelement anordnen.

Eine bevorzugte Ausführungsform der Erfindung sieht vor, dass am Fahrzeugrad und/oder der Fahrzeugfelge zwei separate Dichtelemente vorgesehen sind, wobei jeder Stirnseite und/oder Felgenschüssel ein Dichtelement zugeordnet sein kann. Dabei ist denkbar, dass der Radaußenseite ein Dichtelement mit einer Zugangsöffnung zugewiesen wird, während an der Radinnenseite ein Dichtelement mit einer Durchtrittsöffnung Anwendung findet. Natürlich sind auch andere Anordnungen bzw. Ausführungsformen denkbar, solange gewährleistet wird, dass im Bereich der Fahrzeugfelge ein im Wesentlichen wasserdichter Hohlraum gebildet wird.

Um eine einfache Montage zu gewährleisten kann vorgesehen sein, das Dichtelement in einer im Wesentlichen kreisförmigen Ausgestaltung auszubilden. Der Durchmesser des Dichtelements kann dabei zumindest geringfügig größer als der Durchmesser der Stirnseite bzw. der Felgenschüssel und/oder der Felgenhörner ausgebildet sein. Denkbar ist weiterhin, dass der Seitenrand des Dichtelements bevorzugt im Bereich des Felgenbetts zur Anlage kommen kann und unter Bildung einer kraftschlüssigen Verbindung zumindest bereichsweise vom im Felgenbett angeordneten Fahrzeugreifen gehalten wird. Dies ist insofern vorteilhaft, als dass keine weiteren Befestigungselemente notwendig sind. Es sind im Rahmen der Erfindung natürlich weitere Befestigungsmöglichkeiten denkbar solange gewährleistet wird, dass sich das Dichtelement in einer im Wesentlichen wasserdichten Anordnung am Fahrzeugrad befestigen lässt.

Bei der korrosiven Flüssigkeit zur Durchführung des Verfahrens kann es sich bevorzugt um Wasser handeln. Es sind natürlich auch andere Flüssigkeiten und andere Medien denkbar, vor allem jene, die mit Zusätzen oder dergleichen versehen sind, um ein beschleunigtes Korrosionsverhalten der Felge zu simulieren.

Die Benetzung des Rades durch die korrosive Flüssigkeit kann auf verschiedene Arten und Weisen erfolgen. So kann der im Bereich der Fahrzeugfelge gebildete Hohlraum komplett mit der korrosiven Flüssigkeit gefüllt sein. Alternativ kann es vorgesehen sein, dass eine Sprüheinrichtung vorgesehen ist, die das Rad immer wieder benetzt. Der im Bereich der Fahrzeugfelge gebildete Hohlraum kann auch nur teilweise mit der korrosiven Flüssigkeit gefüllt sein, wenn während der betriebsähnlichen Prüfung eine Bewegung des Rades stattfindet und das Rad durch diese Bewegung (eventuell auch durch ein Panschen von Radteilen wie Speichen) immer wieder benetzt wird.

Natürlich können das Verfahren sowie das Dichtelement auch bei anderen Prüfvorrichtungen, wie beispielsweise einer Umlaufbiegeprüfmaschine, in analoger Weise angewendet werden.

Eine Ausführungsform der vorliegenden Erfindung wird nachfolgend unter Bezugnahme auf die Zeichnungen näher erläutert.

Es zeigen:
- Fig. 1: die schematische Darstellung eines in einer Trommel eines Radprüfstandes angeordneten Fahrzeugrades mit daran befestigten Dichtelementen;
- Fig. 2: einen Bereich eines Dichtelements in einer vergrößerten Ansicht.

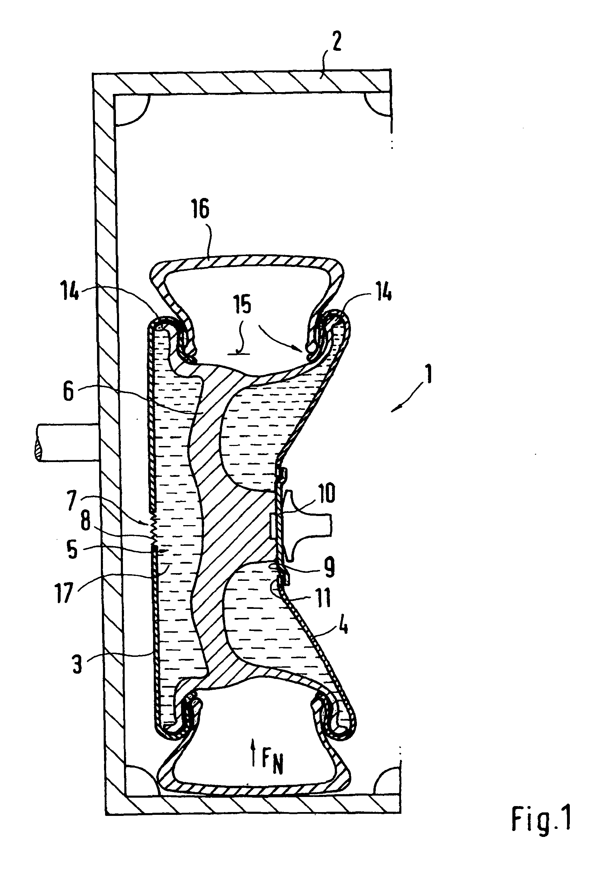

Fig. 1 zeigt ein in einer schematisch dargestellten Trommel (2) eines nicht näher dargestellten Radprüfstandes angeordnetes Fahrzeugrad (1). Mit Hilfe der Trommel (2) können mittels nicht dargestellter Krafterzeuger Radial- und Seitenkräfte auf das Fahrzeugrad (1) wirken. Am Fahrzeugrad (1) sind zwei Dichtmittel (3, 4) vorgesehen, wobei die Dichtmittel (3, 4) unter Bildung eines wasserdichten Hohlraums (5) jeweils eine Stirnfläche der Fahrzeugfelge (6) abdecken. Das Dichtelement (3) deckt hierbei die Außenseite der Fahrzeugfelge (6) ab und das Dichtelement (4) die Felgeninnenseite.
Die Dichtelemente (3, 4) sind in der Art einer wasserdichten Gummimembrane ausgebildet und definieren einen geschlossenen Hohlraum (5) in dem, schematisch dargestellt, korrosive Flüssigkeit (17) angeordnet ist. Das Dichtelement (3) ist auf seiner Vorderseite mit einer Zugangsöffnung (7) versehen über die die korrosive Flüssigkeit (17) in den Hohlraum (5) gefüllt werden kann. Der wasserdichte Hohlraum (5) erstreckt sich im Wesentlichen im gesamten Bereich der Fahrzeugfelge (6) und umgibt sowohl die Felgenaußenseite als auch die Felgeninnenseite bzw. beide Felgenschüsseln.

Die Zugangsöffnung (7) ist mit Mitteln (8) versehen, welche hierbei in der Art eines wasserdichten Reißverschlusses ausgebildet sind. Wie viel korrosive Flüssigkeit (17) dem Hohlraum zugeführt wird ist erfindungsgemäß nicht von Bedeutung solange gewährleistet wird, dass während der Testphase genügend Flüssigkeit vorhanden ist, um eine ausreichende Benetzung bzw. Befeuchtung der Fahrzeugfelge (6) zu erreichen.

Das Dichtelement (4) ist mit einer Durchtrittsöffnung (9) versehen, wobei die Durchtrittsöffnung (9) im Bereich eines das Fahrzeugrad (1) haltenden Halteelements (10) angeordnet ist. An der Durchtrittsöffnung (9) ist ein Dichtmittel (11) zum wasserdichten Abdichten der Durchtrittsöffnung (9) im Kontaktbereich (12) zum Halteelement (10) vorgesehen. Das Halteelement (10) hält das Fahrzeugrad (1) während der Testphase in der Trommel (2) des Radprüfstandes.

Die Dichtelemente (3, 4) weisen jeweils eine im Wesentlichen kreisförmige Ausgestaltung auf, wobei der Durchmesser der Dichtelemente (3, 4) zumindest geringfügig größer als der radiale Durchmesser der Felgenhörner (14) ist. Somit wird ermöglicht, dass die Seitenränder der Dichtelemente (3, 4) im Bereich des Felgenbetts (15) zur Anlage kommen und unter Bildung einer kraftschlüssigen Verbindung zumindest bereichsweise vom im Felgenbett (15) angeordneten Fahrzeugreifen (16) gehalten werden können. Es sind natürlich auch andere Befestigungsmöglichkeiten, beispielsweise Haft oder Klebverbindungen, denkbar.

Mit den erfindungsgemäßen Dichtelementen (3, 4) beziehungsweise dem erfindungsgemäßen Verfahren zur Durchführung eines Korrosionsbeständigkeitstests während einer betriebsähnlichen Prüfung von Kräften am Fahrzeugrad (1) kann ein besonders einfacher und leicht realisierbarer Korrosionsbeständigkeitstest durchgeführt werden. Das Fahrzeugrad (1) bzw. die Fahrzeugfelge (6) kann während der Prüfung unter Korrosionseinfluss getestet werden, wodurch weitere Tests im Hinblick auf die Korrosionsbeständigkeit der Fahrzeugfelge (6) entfallen können.

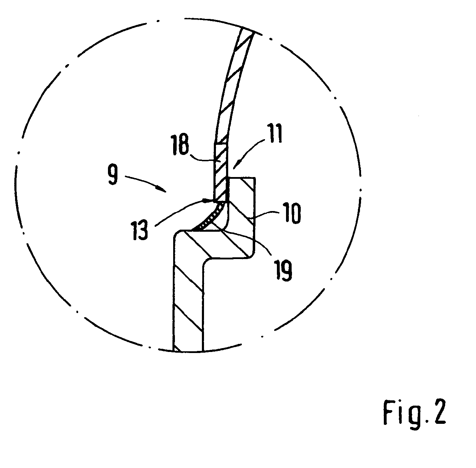

Fig. 2 zeigt in vergrößerter Ansicht den Kontaktbereich (12) des Dichtelements (4). Zu erkennen ist ein Teilausschnitt des Halteelements (10). Die Durchtrittsöffnung (9) des Dichtelements (4) ist mit einem Dichtmittel (11) versehen. Das Dichtmittel (11) ist in der Art eines Dichtlippenrings (13) ausgebildet. Der Dichtlippenring (13) weist sowohl einen festen Ring (18), welcher bereichsweise am Haltelement (10) anliegt, und einen flexiblen Bereich, welcher ebenfalls bereichsweise am Haltelement (10) anliegt, auf. Der flexible Bereich kann in der Art einer Gummilippe (19) oder dergleichen ausgebildet sein.

## Patentansprüche

1. Verfahren zur betriebsähnlichen Prüfung von Radial- und Seitenkräften sowie Neigungswinkeln an einem Fahrzeugrad (1), insbesondere bei einem zwelaxialen Räderprüfstand, wobei bei der Prüfung über zumindest zwei an der Prüfvorrichtung angeordnete Krafterzeuger zumindest eine Vertikal- und eine Seitenlast unmittelbar auf das Fahrzeugrad (1) wirkt, wobei parallel zur betriebsähnlichen Prüfung ein Korrosionsbeständigkeitstest am Fahrzeugrad (1) durchgeführt wird, **dadurch gekennzeichnet, dass** der Korrosionsbeständigkeitstest die aufeinanderfolgenden Verfahrensschritte umfasst:
a.) Bereitstellen zumindest eines Dichtelements (3, 4);
b.) Befestigen des zumindest einen Dichtelements (3, 4) an einem Umfangsrand der Fahrzeugfelge und/oder des Fahrzeugrades (1), wobei unter Bildung eines wasserdichten Hohlraums (5) zumindest eine Stirnfläche und/oder Felgenschüssel der Fahrzeugfelge (6) im Inneren des Hohlraums (5) angeordnet ist;
c.) teilweise oder vollständige Befüllung des Hohlraums (5) mit einer korrosiven Flüssigkeit (17) über zumindest eine am Dichtelement (3, 4) vorgesehene Zugangsöffnung (7);
d.) Verschließen der Zugangsöffnung (7).

2. Dichtelement, zur Durchführung eines Korrosionsbeständigkeitstests nach Ansprüch 1, **dadurch gekennzeichnet, dass** das Dichtelement (3, 4) in der Art einer wasserdichten Hülle und/oder Abdeckung, insbesondere einer wasserdichten Gummimembrane, ausgebildet ist, wobei an der am Dichtelement (3, 4) vorgesehenen Zugangsöffnung (7) Mittel (8) zum Verschließen der Zugangsöffnung (7) vorgesehen sind.

3. Dichtelement nach Anspruch 2, **dadurch gekennzeichnet, dass** die Mittel (8) in der Art eines wasserdichten Reiß-, Dreh- und/oder Schraubverschlusses ausgebildet sind.

4. Dichtelement nach einem der Ansprüche 2 bis 3, **dadurch gekennzeichnet, dass** am Dichtelement (3, 4) zumindest eine Durchtrittsöffnung (9) vorgesehen ist, wobei im Bereich der Durchrittsöffnung (9) ein Halteelement (10) angeordnet ist, an dem das Fahrzeugrad (1) befestigt ist.

5. Dichtelement nach Anspruch 4, **dadurch gekennzeichnet, dass** an der Durchtrittsöffnung (9) Dichtmittel (11) zum wasserdichten Abdichten der Durchtrittsöffnung (9) im Kontaktbereich (12) zum Haltelement (10) vorgesehen sind.

6. Dichtelement nach Anspruch 5, **dadurch gekennzeichnet, dass** die Dichtmittel (11) in der Art einer Dichtung, insbesondere eines Dichtlippenrings (13), ausgebildet sind.

7. Dichtelement nach einem der Ansprüche 2 bis 6, **dadurch gekennzeichnet, dass** am Fahrzeugrad (1) und/oder der Fahrzeugfelge zwei Dichtelemente (3,4) vorgesehen sind, wobei jeder Stirnseite und/oder Felgenschüssel ein Dichtelement (3, 4) zugeordnet ist.

8. Dichtelement nach einem der Ansprüche 2 bis 7, **dadurch gekennzeichnet, dass** das Dichtelement (3, 4) eine im Wesentlichen kreisförmige Ausgestaltung aufweist, wobei der Durchmesser des Dichtelements (3, 4) zumindest geringfügig größer als der Durchmesser der Stirnseite bzw. der Felgenschüssel und/oder der Felgenhörner (14) ausgebildet ist.

9. Dichtelement nach einem der Ansprüche 2 bis 8, **dadurch gekennzeichnet, dass** der Seitenrand des Dichtelements (3, 4) bevorzugt im Bereich des Felgenbetts (15) zur Anlage kommt und unter Bildung einer kraftschlüssigen Verbindung zumindest bereichsweise vom im Felgenbett (15) angeordneten Fahrzeugreifen (16) gehalten wird.

10. Dichtelement nach einem der Ansprüche 2 bis 9, **dadurch gekennzeichnet, dass** es sich bei der korrosiven Flüssigkeit (17) um Wasser handelt.

## Claims

1. Method for the testing, in a manner which is similar to operation, of radial and lateral forces and angles of inclination at a vehicle wheel (1), in particular in a two-axle wheel test bench, at least one vertical load and one lateral load acting directly on the vehicle wheel (1), during the testing, via at least two force generators which are arranged on the testing apparatus, a corrosion-resistance test being carried out on the vehicle wheel (1) in parallel to the testing in a manner which is similar to operation, **characterized in that** the corrosion-resistance test comprises the method steps which follow one another:
a.) provision of at least one sealing element (3, 4);
b.) fastening of the at least one sealing element (3, 4) to a circumferential edge of the vehicle rim and/or of the vehicle wheel (1), at least one end face and/or inner rim of the vehicle rim (6), with the formation of a watertight cavity (5), being arranged in the interior of the cavity (5);
c.) partial or complete filling of the cavity (5) with a corrosive liquid (17) via at least one access opening (7) which is provided on the sealing element (3, 4);
d.) closing of the access opening (7).

2. Sealing element, for carrying out a corrosion-resistance test according to Claim 1, **characterized in that** the sealing element (3, 4) is configured in the manner of a watertight sheath and/or cover, in particular a watertight rubber membrane, means (8) for closing the access opening (7) being provided at the access opening (7) which is provided on the sealing element (3, 4).

3. Sealing element according to Claim 2, **characterized in that** the means (8) are configured in the manner of a watertight zip fastening, twist cap and/or screw cap.

4. Sealing element according to either of Claims 2 and 3, **characterized in that** at least one passage opening (9) is provided on the sealing element (3, 4), a holding element (10), to which the vehicle wheel (1) is fastened, being arranged in the region of the passage opening (9).

5. Sealing element according to Claim 4, **characterized in that** sealing means (11) are provided at the passage opening (9) for the watertight sealing of the passage opening (9) in the contact region (12) with the holding element (10).

6. Sealing element according to Claim 5, **characterized in that** the sealing means (11) are configured in the manner of a seal, in particular a sealing-lip ring (13).

7. Sealing element according to one of Claims 2 to 6, **characterized in that** two sealing elements (3, 4) are provided on the vehicle wheel (1) and/or the vehicle rim, each end side and/or inner rim being assigned a sealing element (3, 4).

8. Sealing element according to one of Claims 2 to 7, **characterized in that** the sealing element (3, 4) has a substantially circular design, the diameter of the sealing element (3, 4) being of at least slightly greater configuration than the diameter of the end side or the inner rim and/or of the rim flanges (14).

9. Sealing element according to one of Claims 2 to 8, **characterized in that** the side edge of the sealing element (3, 4) preferably comes into contact in the region of the rim well (15) and, with the formation of a non-positive connection, is held at least in regions by the vehicle tyre (16) which is arranged in the rim well (15).

10. Sealing element according to one of Claims 2 to 9, **characterized in that** the corrosive liquid (17) is water.

## Revendications

1. Procédé destiné à la vérification dans des conditions simulées d'opération des forces radiales et latérales ainsi que des angles d'inclinaison au niveau d'une roue de véhicule (1), notamment en présence d'un état de vérification biaxial des roues, au moins une charge verticale et une charge latérale s'exerçant directement sur la roue de véhicule (1) lors de la vérification effectuée par le biais d'au moins deux éléments de production de force disposés au niveau du dispositif de vérification, un test de résistance à la corrosion étant effectué au niveau de la roue de véhicule (1) parallèlement à la vérification dans des conditions simulées d'opération, **caractérisé en ce que** le test de résistance à la corrosion comprend les étapes de procédé suivantes :
a) mise à disposition d'au moins un élément d'étanchéité (3, 4) ;
b) fixation de l'au moins un élément d'étanchéité (3, 4) à une bordure périphérique de la jante de véhicule et/ou de la roue de véhicule (1), au moins une surface avant et/ou une cuvette de jante de la jante de véhicule (6) étant disposés à l'intérieur de l'espace creux (5) par formation d'un espace creux (5) étanche à l'eau ;
c) remplissage partiel ou total de l'espace creux (5) à l'aide d'un fluide corrosif (17) par le biais d'au moins une ouverture d'accès (7) prévue au niveau de l'élément d'étanchéité (3, 4) ;
d) fermeture de l'ouverture d'accès (7).

2. Élément d'étanchéité utilisé pour la mise en oeuvre d'un test de résistance à la corrosion selon la revendication 1, **caractérisé en ce que** l'élément d'étanchéité (3, 4) est conçu à la façon d'une enveloppe et/ou d'un cache étanche à l'eau, notamment d'une membrane en caoutchouc étanche à l'eau, des moyens (8) de fermeture de l'ouverture d'accès (7) étant prévus au niveau de l'ouverture d'accès (7) elle-même prévue au niveau de l'élément d'étanchéité (3, 4).

3. Élément d'étanchéité selon la revendication 2, **caractérisé en ce que** les moyens (8) sont réalisés à la façon d'une fermeture déchirable, pivotable et/ou vissable étanche à l'eau.

4. Élément d'étanchéité selon l'une quelconque des revendications 2 à 3, **caractérisé en ce qu'**au moins une ouverture traversante (9) est prévue au niveau de l'élément d'étanchéité (3, 4), un élément d'arrêt (10) au niveau duquel la roue de véhicule (1) est fixée étant disposé dans la région de l'ouverture traversante (9).

5. Élément d'étanchéité selon la revendication 4, **caractérisé en ce que** des moyens d'étanchéification (11) sont prévus au niveau de l'ouverture traversante (9) pour étanchéifier de façon étanche à l'eau l'ouverture traversante (9) dans la zone de contact (12) par rapport à l'élément d'arrêt (10).

6. Élément d'étanchéité selon la revendication 5, **caractérisé en ce que** les moyens d'étanchéification (11) sont réalisés à la façon d'un joint, notamment d'une bague à lèvre étanche (13).

7. Élément d'étanchéité selon l'une quelconque des revendications 2 à 6, **caractérisé en ce que** deux éléments d'étanchéité (3, 4) sont prévus au niveau de la roue de véhicule (1) et/ou de la jante de véhicule, un élément d'étanchéité (3, 4) étant associé à chaque côté avant et/ou à chaque cuvette de jante.

8. Élément d'étanchéité selon l'une quelconque des revendications 2 à 7, **caractérisé en ce que** l'élément d'étanchéité (3, 4) présente une configuration pour l'essentiel en forme de cercle, le diamètre de l'élément d'étanchéité (3, 4) étant réalisé de façon à être au moins légèrement plus grand que le diamètre du côté avant et/ou de la cuvette de jante et/ou des rebords de jante (14).

9. Élément d'étanchéité selon l'une quelconque des revendications 2 à 8, **caractérisé en ce que** le bord latéral de l'élément d'étanchéité (3, 4) est placé de préférence dans la zone de la base de jante (15) et est en partie maintenu par le pneumatique de véhicule (16) disposé dans la base de jante (15) par le biais d'une liaison par complémentarité de forces.

10. Élément d'étanchéité selon l'une quelconque des revendications 2 à 9, **caractérisé en ce que** le fluide corrosif (17) est de l'eau.
